# FASCICULE DE BREVET EUROPEEN

(11) **EP 0 655 979 B1**
(45) Date de publication et mention de la délivrance du brevet: **13.11.1996**
(21) Numéro de dépôt: 94920501.7
(22) Date de dépôt: 22.06.1994
(51) Int. Cl.: B60N 2/02

(54) **DISPOSITIF DE REGLAGE DES SIEGES DE VEHICULES**
VORRICHTUNG ZUR EINSTELLUNG EINES FAHRZEUGSITZES
VEHICLE SEAT ADJUSTMENT DEVICE

(30) Priorité: 24.06.1993 FR 9307696
(43) Date de publication de la demande: 07.06.1995
(73) Titulaire: BERTRAND FAURE AUTOMOBILE "B.F.A.", F-91300 Massy (FR)
(72) Inventeur: JUDIC, Jean-Marc, F-91400 Orsay (FR); LEROY, Yannick, F-14100 Lisieux (FR)
(74) Mandataire: Burbaud, Eric
(86) Numéro de dépôt international: FR9400754
(87) Numéro de publication internationale: WO9500356

(56) Documents cités:
- DE-A- 3 718 126
- FR-A- 2 664 995
- US-A- 4 204 255
- US-A- 5 164 645

## Description

L'invention est relative aux dispositifs de réglage des sièges de véhicules, notamment des sièges avant de véhicules automobiles, les réglages considérés étant au moins au nombre de deux et concernant de préférence la position longitudinale du siège et la hauteur de l'assise, d'autres réglages étant avantageusement considérés en outre tels que ceux concernant l'inclinaison du dossier, l'inclinaison de l'assise, la longueur de l'assise, la hauteur de l'appui-tête, l'inclinaison de cet appui-tête, etc.

Elle vise également les sièges de véhicules équipés de tels dispositifs.

Elle vise plus particulièrement, parmi ces dispositifs et sièges, ceux qui comprennent des mécanismes susceptibles d'effectuer des réglages mettant en oeuvre des déplacements mutuels prédéterminés de deux pièces (lesquels déplacements peuvent être de simples déplacements angulaires ou linéaires ou des déplacements plus complexes), des moteurs électriques à double sens de rotation associés à ces mécanismes et des moyens de commande de ces moteurs faciles à actionner par l'usager assis sur le siège.

Dans les modes de réalisation connus des dispositifs du genre en question, les moteurs sont commandés en tout ou rien et indépendamment les uns des autres.

Il en résulte que les réglages des différents mouvements du siège ou des parties du siège (avance ou recul du siège, inclinaison du dossier, hauteur de l'assise...) suivent les lois imposées par les solutions mécaniques utilisées, et ne peuvent être effectués que successivement et indépendamment les uns des autres.

Celles, de ces lois, qui sont imposées par les solutions mécaniques classiques sont simples (translations, rotations), pour être économiquement acceptables.

Elles ne permettent donc pas d'obtenir des mouvements de base ergonomiquement satisfaisants et leurs combinaisons qui en ont été proposées jusqu'à ce jour sont inadaptées à la biomécanique humaine, de sorte que l'utilisateur du siège doit effectuer de multiples réajustements pour corriger les effets pervers de ces combinaisons.

Si par exemple, dans un premier temps, on règle la position longitudinale du siège de façon que le talon du pied droit de la personne assise sur ce siège se trouve naturellement, c'est-à-dire pour un degré de pliage idéal de la jambe correspondante, en sa position pour laquelle la pointe dudit pied peut commander aisément la pédale de l'accélérateur du véhicule, le réglage subséquent de la hauteur de l'assise peut se traduire par un repliement ou un étirement indésirable de ladite jambe.

Un autre exemple est celui des assises dont la hauteur est réglable à l'aide de deux mécanismes affectés respectivement à la hauteur de la portion avant et à la hauteur de la portion arrière : une simple modification de la hauteur d'une telle assise requiert des réglages identiques de ces deux mécanismes et si les amplitudes des réglages verticaux effectués respectivement par les deux mécanismes ne sont pas rigoureusement identiques, on observe une modification de l'inclinaison préréglée de l'assise, voire même une modification de l'inclinaison préréglée du dossier.

Dans chaque cas, la maîtrise de l'ensemble des différents réglages proposés exige un certain apprentissage et une relative dextérité.

L'expérience montre qu'il est difficile d'imposer à l'usager l'effort intellectuel nécessaire pour comprendre complètement le fonctionnement et les possibilités des réglages multiples de son siège et pour apprendre à s'en servir : en définitive, on constate que, dans la pratique, l'usager renonce très souvent à rectifier ses premiers réglages lorsqu'ils ont été perturbés par des réglages ultérieurs, ce qui est bien entendu nuisible à son confort.

Pour remédier à cet inconvénient, il a déjà été proposé de combiner les réglages de deux paramètres distincts, tels que ceux des exemples qui viennent d'être donnés,
- soit en combinant les mécanismes de réglage de ces deux paramètres et en commandant le mécanisme composite résultant à l'aide d'un seul moteur,
- soit en commandant simultanément les fonctionnements en tout ou rien de deux moteurs affectés respectivement aux réglages des deux paramètres en question par actionnements simultanés respectifs de deux commutateurs.

La première formule présente les inconvénients d'exiger l'utilisation d'un mécanisme compliqué, coûteux et de fiabilité réduite.

La seconde solution, si elle offre une plus grande liberté pour la loi de déplacement du siège, nécessite une certaine dextérité et un apprentissage important. De plus, les mouvements du siège ne sont pas alors précisément coordonnés.

Il a également été proposé d'associer aux mécanismes de réglage d'un siège de véhicule un ensemble électronique permettant de mémoriser les positions occupées par lesdits mécanismes lorsqu'ils assurent un bon confort d'un usager donné pour des conditions données d'occupation correspondant par exemple à une "conduite rapide" ou à une "conduite calme"... (voir par exemple le document US-A-4 204 255).

Cette solution permet de retrouver facilement une "bonne posture" préréglée, mais elle ne permet pas de déterminer cette bonne posture en absence de préréglage ou de la modifier au cours d'un voyage.

La présente invention a pour but de remédier aux différents inconvénients présentés par les différentes solutions connues en permettant notamment d'assurer, avec précision les mouvements recommandés par les ergonomes sans nécessiter l'étude de mécanismes complexes.

A cet effet les dispositifs de réglage de sièges du genre en question conformes à l'invention comprennent encore des mécanismes de réglage de paramètres réglables P, Q, R... (position longitudinale du siège, hauteur de l'assise, inclinaison du dossier...), des moteurs électriques à double sens de rotation associés à ces mécanismes et des moyens de commande de ces moteurs faciles à actionner par l'usager assis sur le siège, ainsi que des moyens pour détecter à chaque instant la valeur de chacun des paramètres à régler P, Q, R..., valeur qui est représentée par une grandeur électrique p, q, r..., et ils sont essentiellement caractérisés en ce que les moteurs sont d'un type dont la vitesse est variable en fonction de l'excitation, en ce que les moyens de commande de ces moteurs sont agencés de façon à pouvoir appliquer sur ceux-ci des excitations variables, en ce qu'il est prévu en outre des moyens de mémoire dans lesquels sont enregistrées des lois liant entre eux les différents paramètres à régler et leurs variations, lois pré-programmées déterminées en fonction essentiellement des normes ergonomiques relatives au corps humain, et des moyens de calcul agencés de façon à faire correspondre à chaque petite variation dp de chaque grandeur électrique p introduite en eux les petites variations correspondantes dq, dr.. des autres grandeurs électriques q,r... résultant des lois pré-programmées et en ce que les moyens de commande sont pré-programmés de façon à asservir à chaque commande de variation d'un paramètre P dans un sens donné, l'élaboration d'une grandeur électrique dp qui se traduit non seulement par une excitation correspondante du moteur affecté au réglage du paramètre P, mais aussi par l'excitation, à l'aide de chacune des grandeurs dq, dr, ... calculées en conséquence, du moteur affecté au réglage du paramètre correspondant Q,R...

Dans des modes de réalisation préférés, on a recours en outre à l'une et/ou à l'autre des dispositions suivantes :
- dans un dispositif de réglage du genre ci-dessus défini, pour lequel les moyens pour détecter à chaque instant la valeur réelle des paramètres à régler P, Q, R... comprennent des capteurs de position agencés et montés de façon à élaborer des grandeurs électriques p₀,q₀,r₀... représentatives des valeurs réelles à chaque instant desdits paramètres, les moyens de commande sont agencés de façon à élaborer, pour chacune des valeurs p₀ ainsi élaborées, lorsque l'une au moins des autres valeurs q₀, r₀... ne respecte pas la loi pré-programmée qui la lie à la valeur p₀, une grandeur correctrice dqᵢ, drᵢ... égale à la différence entre, d'une part, la valeur idéale qᵢ,rᵢ... qui correspond selon la loi pré-programmée ci-dessus à ladite valeur p₀ et, d'autre part, la valeur réelle détectée q₀,r₀..., et à actionner en correspondance le moteur affecté au réglage du paramètre concerné Q,R... autre que le paramètre P,
- le dispositif de réglage comprend en outre des moyens pour neutraliser momentanément l'ensemble des moyens de commande pré-programmés et rendre ainsi possible le réglage motorisé indépendant de l'un au moins P des paramètres à régler P,Q,R... de façon à lui donner sa valeur correspondant au réglage idéal de l'un au moins des deux critères morphologiques suivants : degré de pliage des jambes de l'usager du siège et positionnement vertical de ses yeux par rapport au plan idéal de visée pour la conduite, les moyens de calcul étant agencés de façon telle que, lors de la mise en oeuvre ultérieure du dispositif après suppression de sa neutralisation, le réglage idéal dudit critère ne puisse plus être substantiellement modifié.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre très schématiquement un siège de véhicule ainsi que quatre paramètres de ce siège susceptibles d'être réglés conformément à l'invention.

La figure 2 montre aussi schématiquement ledit siège ainsi que les différents composants du dispositif de réglage des quatre paramètres ci-dessus, établis conformément à l'invention.

La figure 3 est un graphique permettant d'expliquer un mode de fonctionnement d'un dispositif de réglage conforme à l'invention.

La figure 4 est un schéma illustrant certains principes mis en oeuvre à l'aide des dispositifs de réglage selon l'invention.

D'une façon connue en soi, on dispose d'un siège avant de véhicule automobile comprenant :
- une embase 1 montée coulissante sur le plancher 2 du véhicule par l'intermédiaire d'au moins une glissière 3 de réglage longitudinal,
- une assise 4 montée sur l'embase 1 par l'intermédiaire d'un mécanisme de réglage en hauteur ou "rehausse" 5,
- un mécanisme (non représenté) permettant de régler l'inclinaison de l'assise 4 autour d'un axe horizontal transversal 6 lié à l'ossature supérieure de la rehausse 5,
- un dossier 7 monté pivotant autour d'un axe horizontal transversal 8 lié à l'ossature de l'assise 4 ou à l'embase 1,
- et un mécanisme (non représenté) permettant de régler l'inclinaison du dossier 7 autour de l'axe 8.

Les quatre paramètres susceptibles d'être réglés pour ce siège sont ici :
- sa position longitudinale P, modifiable par avance ou recul du siège le long de la glissière 3,
- l'inclinaison Q de son dossier 7 autour de l'axe 8,
- la hauteur R de l'assise, réglable par déploiement ou repliement vertical de la rehausse 5,
- et l'inclinaison S de l'assise 4 autour de l'axe 6.

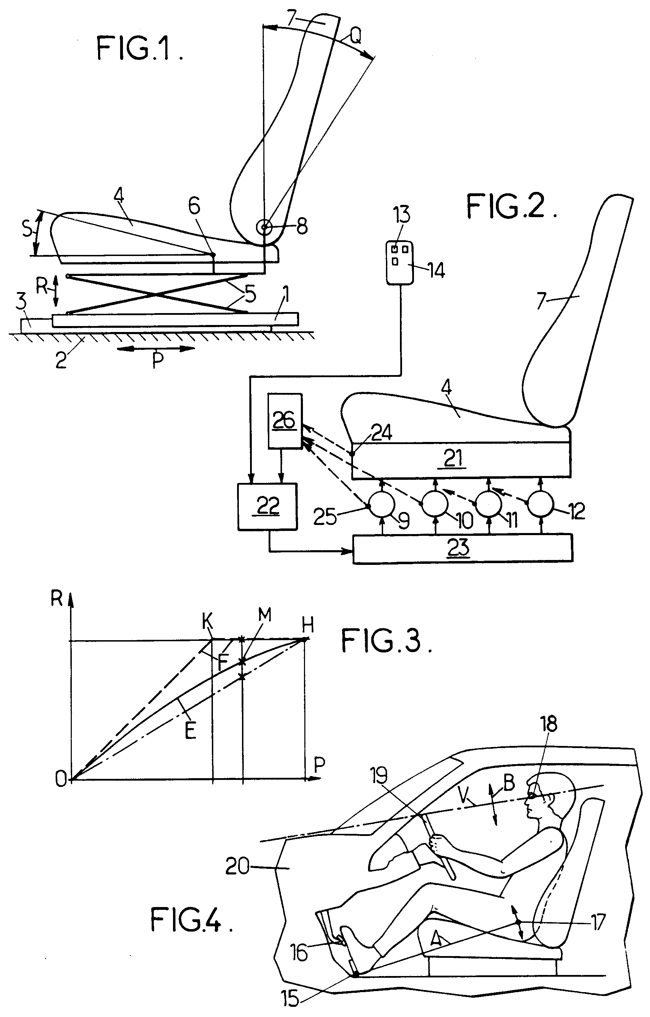

Les réglages de chacun de ces quatre paramètres P, Q, R et S sont obtenus par des déplacements angulaires ou linéaires relativement simples, lesquels sont engendrés à partir de quatre petits moteurs électriques de commande 9,10,11,12 (figure 2) à double sens de rotation.

Les excitations de ces moteurs 9 à 12 sont commandées par l'usager assis sur le siège en actionnant des interrupteurs électriques appropriés : ces actionnements sont par exemple obtenus par appui des boutons poussoirs 13 d'un clavier 14 facilement accessible dudit usager ou de toute autre façon analogue.

Dans les modes de réalisation qui ont été proposés jusqu'à ce jour pour les dispositifs de réglage du genre en question, les moteurs électriques sont du type "tout ou rien", c'est-à-dire aptes à fonctionner chacun à une vitesse constante et unique, et leurs commandes respectives sont indépendantes les unes des autres.

En se référant aux figures 3 et 4, on va exposer ci-après certains des inconvénients de telles formules.

Sur le graphique de la figure 3, on a porté en abscisses le paramètre P ci-dessus (position longitudinale du siège) et en ordonnées, le paramètre R (hauteur de l'assise).

L'origine O des coordonnées correspond à l'état de réglage du siège pour un usager de grande taille, c'est-à-dire à la position du siège la plus reculée et la plus basse et on a indiqué en H un point correspondant à l'état de réglage du siège pour un usager de petite taille, c'est-à-dire à la position du siège la plus avancée et la plus haute.

Si on suppose que l'état initialement réglé du siège correspondant au point O, un usager de taille moyenne désirera à la fois avancer et relever son assise, c'est-à-dire faire progresser du point O vers le point H, sur le graphique de la figure 3, le point M représentatif du double réglage des paramètres P et R.

Les études ergonomiques montrent que la progression idéale de ce point M ne suit pas obligatoirement la droite OH, mais une courbe E, qui est général une courbe incurvée selon un arc de parabole ou analogue admettant le segment de droite OH comme sécante.

Si aucune aide n'est apportée à l'usager pour le guider dans ses commandes respectives des deux moteurs 9 et 11 affectés respectivement aux réglages des deux paramètres P et R, le point représentatif de l'évolution dans le temps de ce double réglage se déplacera de façon erratique sur le graphique de la figure 3 et il lui faudra donc beaucoup de temps pour parvenir à placer le point en question sur la courbe idéale E en jouant sur ces deux réglages.

Si les deux moteurs sont commandés simultanément en tout ou rien, on observera une progression du genre de celle représentée par la courbe F pour laquelle l'un des deux réglages parvient à l'extrémité de sa course avant l'autre, au point K : ici encore, l'atteinte du réglage idéal impliquera de multiples tentatives de l'usager à partir du point, de la courbe F, correspondant à l'arrêt de sa progression.

Une progression selon la droite OH correspondrait sans doute à une approche un peu plus fine, mais elle supposerait déjà un ajustement relatif des vitesses constantes de réglage des deux moteurs 9 et 11.

L'invention permet de faire suivre la courbe idéale E par le point M représentatif de l'évolution du double réglagle ici considéré.

Pour guider avec le maximum d'utilité la progression des réglages des différents paramètres P,Q,R,S, il convient également de prendre en compte les deux critères morphologiques suivants, schématisés sur la figure 4 :
A: degré de pliage des jambes de l'usager,
B: position verticale des yeux de l'usager,
et de respecter à leur égard les deux exigences suivantes :
- obtention des valeurs idéales pour chacun des deux critères A et B,
- et maintien le plus complet possible de chacun de ces deux critères en sa valeur préréglée à partir de l'instant où ce préréglabe a été réalisé.

Le premier de ces deux critères A (degré de pliage des jambes) correspond à la distance entre, d'une part, le talon 15 de l'usager reposant sur le plancher du véhicule en sa position pour laquelle la pointe du pied correspondant peut aisément actionner la pédale 16 de l'accélérateur et, d'autre part, l'axe d'articulation 17 des jambes ou hanches de l'usager.

Le second critère B correspond à la distance verticale entre les yeux 18 de l'usager et un plan V de visée correspondant à la visibilité idéale du conducteur, plan passant par exemple par le point le plus haut du volant 19 et le sommet du capot 20.

Il est clair que, à partir du moment où l'un de ces deux critères A et B a été réglé, il convient, dans toute la mesure du possible, de ne plus le dérégler lors des réglages ultérieurs du siège.

Ces différentes considérations sont prises en compte par le présent dispositif de réglage.

Ce dispositif comprend les mécanismes de réglage ci-dessus des paramètres P,Q,R,S, schématisés par le rectangle 21, les moteurs 9 à 12 et les moyens de commande 13,14, disposés à la portée de l'usager.

En outre, les moteurs 9 à 12 à double sens de rotation sont ici d'un type à vitesse variable, c'est-à-dire aptes à fonctionner à des vitesses variables, de préférence proportionnelles aux tensions, continues ou hachées, qui les alimentent.

Par ailleurs, on prévoit un ensemble 22 de mémoire et de calcul agencé de façon :
- d'une part, à enregistrer des lois pré-programmées, déterminées en fonction des constatations ergonomiques relatives au corps humain, des cotes de l'habitacle contenant le siège concerné, du rôle affecté à l'usager de ce siège (conducteur ou passager)..., lois qui relient entre eux les différents paramètres P,Q,R et S à régler, ces paramètres étant représentés par des grandeurs électriques p,q,r,s qui leur sont de préférence proportionnelles,
- et, d'autre part, à faire correspondre à chaque valeur de chaque grandeur électrique appliquée à son entrée et représentative de l'un des paramètres ci-dessus, les valeurs, des autres grandeurs électriques correspondant aux autres paramètres, qui résultent des lois pré-programmées.

On prévoit également une interface de commande 23 agencée de façon à asservir à chaque commande de variation d'un paramètre P dans un sens donné, effectuée par actionnement des moyens de commande 13,14, l'élaboration d'une grandeur électrique dp qui se traduit non seulement par une excitation correspondante du moteur affecté au réglage du paramètre P, mais aussi par l'élaboration des grandeurs électriques dq, dr et ds déterminées par les calculs ci-dessus en fonction de la grandeur dp et par l'excitation, à l'aide de ces dernières grandeurs, des moteurs affectés aux réglages des autres paramètres Q,R et S.

De la sorte, et si l'on suppose qu'au départ, c'est-à-dire lorsque l'usager se met en place sur son siège, les différents paramètres de réglage de ce siège occupent des positions compatibles avec les différentes lois pré-programmées, la commande du réglage de l'un quelconque de ces paramètres s'accompagne simultanément par des commandes corrélatives des réglages des autres paramètres respectant les lois pré-programmées, c'est-à-dire faisant intervenir des vitesses, des différents moteurs 9 à 12, qui ne sont pas constantes, mais varient en fonction desdits programmes.

Les programmes en question tiennent compte, dans toute la mesure du possible, de ce qui a été indiqué ci-dessus en ce qui concerne la conservation des critères morphologiques A et B à partir du moment où l'un au moins de ceux-ci a été préréglé.

Elle tient compte également des lois d'évolution, du type de celle qui a été schématisée par la courbe E ci-dessus, concernant les relations respectives des différents paramètres P,Q,R,S deux à deux.

Pour connaître à chaque instant la valeur réelle de chacun des paramètres P,Q,R,S à régler, on a recours à des capteurs de position qui sont symbolisés respectivement sur la figure 2 par les points 24 et 25, affectés respectivement aux mécanismes de réglage 21 du siège lui-même et aux ensembles de motorisation (9-12 et 23), capteurs agencés de façon à élaborer, en association avec un circuit approprié 26, des grandeurs électriques p,q,r et s liées auxdits paramètres.

Ce sont ces grandeurs qui sont appliquées sur l'ensemble 22 aux fins d'exploitation précisées ci-dessus.

Ce qui vient d'être dit suppose qu'à l'origine les différents paramètres P,Q,R,S, présentent respectivement des valeurs relatives compatibles avec les lois pré-programmées.

Mais ce n'est pas obligatoirement toujours le cas.

C'est pourquoi il peut être utile de procéder à des préréglages correctifs permettant de retrouver une telle compatibilité.

A cet effet, on fait comprendre à l'ensemble 22 des moyens propres à élaborer des termes correctifs sur les bases suivantes.

Pour chaque valeur réelle p₀ d'une grandeur électrique p correspondant à un paramètre P à régler, il existe :
- d'une part, des valeurs idéales qᵢ, rᵢ et sᵢ des autres grandeurs électriques q,r et s correspondant aux trois autres paramètre Q,R et S à régler et déterminées par les lois pré-programmées,
- et, d'autre part, les valeurs réelles q₀,r₀ et s₀, de ces grandeurs q,r et s, qui correspondent aux valeurs réelles instantanées desdits paramètres.

Les valeurs correctives dqᵢ, drᵢ et dsᵢ sont précisément les différences qᵢ-q₀, rᵢ-r₀ et sᵢ-s₀.

Ces termes correctifs sont utilisés pour exciter les moteurs 10,11 et 12 dans les sens conduisant à leurs annulations respectives.

Lorsque ces termes correctifs sont annulés, on est ramené au problème précédent.

Bien entendu, il convient de prévoir des moyens pour neutraliser les ensembles de calcul et de commande programmée de façon à permettre isolément le réglage de l'un au moins des différents paramètres P,Q,R et S, par exemple au début du réglage global du siège, ces ensembles n'étant ensuite mis en oeuvre qu'après obtention du premier réglage indiqué.

En suite de quoi, et quel que soit le mode de réalisation adopté, on obtient finalement un dispositif de réglage de siège de véhicule dont la constitution, le fonctionnement et les avantages résultent suffisamment de ce qui précède.

## Revendications

1. Dispositif de réglage de siège de véhicule, comprenant des mécanismes (21) de réglage de paramètres réglables P, Q, R... (position longitudinale du siège, hauteur de l'assise, inclinaison du dossier...), des moteurs électriques à double sens de rotation (9-12) associés à ces mécanismes et des moyens de commande (13,14) de ces moteurs faciles à actionner par l'usager assis sur le siège, ainsi que des moyens (24-26) pour détecter à chaque instant la valeur de chacun des paramètres à régler P, Q, R..., valeur qui est représentée par une grandeur électrique p, q, r..., caractérisé en ce que les moteurs (9-12) sont d'un type dont la vitesse est variable en fonction de l'excitation, en ce que les moyens de commande (23) de ces moteurs sont agencés de façon à pouvoir appliquer sur ceux-ci des excitations variables, en ce qu'il est prévu en outre des moyens de mémoire (22) dans lesquels sont enregistrées des lois liant entre eux les différents paramètres à régler et leurs variations, lois pré-programmées déterminées en fonction essentiellement des normes ergonomiques relatives au corps humain, et des moyens de calcul (22) agencés de façon à faire correspondre à chaque petite variation dp de chaque grandeur électrique p introduite en eux les petites variations correspondantes dq, dr.. des autres grandeurs électriques q,r... résultant des lois pré-programmées et en ce que les moyens de commande (23) sont pré-programmés de façon à asservir à chaque commande de variation d'un paramètre P dans un sens donné, l'élaboration d'une grandeur électrique dp qui se traduit non seulement par une excitation correspondante du moteur (9-12) affecté au réglage du paramètre P, mais aussi par l'excitation, à l'aide de chacune des grandeurs dq, dr, ... calculées en conséquence, du moteur (9-12) affecté au réglage du paramètre correspondant Q,R...

2. Dispositif de réglage selon la revendication 1, pour lequel les moyens (24-26) pour détecter à chaque instant la valeur réelle des paramètres à régler P, Q, R... comprennent des capteurs de position agencés et montés de façon à élaborer des grandeurs électriques p₀,q₀,r₀... représentatives des valeurs réelles à chaque instant desdits paramètres, caractérisé en ce que les moyens de commande (23) sont agencés de façon à élaborer, pour chacune des valeurs p₀ ainsi élaborées, lorsque l'une au moins des autres valeurs q₀, r₀... ne respecte pas la loi pré-programmée qui la lie à la valeur p₀, une grandeur correctrice dqᵢ, drᵢ... égale à la différence entre, d'une part, la valeur idéale qᵢ,rᵢ... qui correspond selon la loi pré-programmée ci-dessus à ladite valeur p₀ et, d'autre part, la valeur réelle détectée q₀,r₀..., et à actionner en correspondance le moteur (9-12) affecté au réglage du paramètre concerné Q,R... autre que le paramètre P.

3. Dispositif de réglage selon l'une quelconque des revendications 1 et 2, caractérisé en ce qu'il comprend des moyens pour neutraliser momentanément l'ensemble des moyens de commande pré-programmés et rendre ainsi possible le réglage motorisé indépendant de l'un au moins P des paramètres à régler P,Q,R... de façon à lui donner sa valeur correspondant au réglage idéal de l'un au moins des deux critères morphologiques suivants : degré de pliage (A) des jambes de l'usager du siège et positionnement vertical (B) de ses yeux par rapport au plan idéal de visée pour la conduite, les moyens de calcul étant agencés de façon telle que, lors de la mise en oeuvre ultérieure du dispositif après suppression de sa neutralisation, le réglage idéal dudit critère ne puisse plus être substantiellement modifié.

## Claims

1. A vehicle seat adjustment device comprising mechanisms (21) for adjusting adjustable parameters P, Q, R, ... (longitudinal seat position, height of seat proper, inclination of seat back, ...), reversible electric motors (9-12) associated with said mechanisms, and control means (13, 14) for said motors that are easily actuated by a user sitting on the seat, together with means (24-26) for detecting the values of each of the parameters P, Q, R, ..., at each instant, which values are represented by electrical magnitudes p, q, r, ..., the device being characterized in that the motors (9-12) are of a type in which motor speed is variable as a function of excitation, in that the control means (23) for the motors are organized so as to be capable of applying variable excitations thereto, in that provision is further made for memory means (22) in which relationships are stored interrelating the various parameters that are to be adjusted and variations therein, which preprogrammed relationships are determined essentially as a function of ergonomic standards relating to the human body, and for computation means (22) organized to cause each small variation dp of each electrical magnitude p input therein to correspond to corresponding small variations dq, dr, ... in the other electrical magnitudes q, r, ... resulting from the preprogrammed relationships, and in that the control means (23) are preprogrammed so as to slave each command for varying one of the parameters P in a given direction to generation of an electrical magnitude dp which gives rise not only to corresponding excitation of the motor (9-12) associated with adjusting said parameter P, but also to excitation as a function of each of the correspondingly computed magnitudes dq, dr, ..., of each of the motors (9-12) for adjusting the corresponding parameters Q, R, ... .

2. An adjustment devise according to claim 1, in which the means (24-26) for detecting at each instant the real value of the parameters to be adjusted P, Q, R, ... include position sensors mounted and organized to generate electrical magnitudes p₀, q₀, r₀, ... representative of the real values at each instant of said parameters, characterized in that the control means (23) are organized so as to generate correcting magnitudes dqᵢ, drᵢ, ... for each of the values p₀ generated in this way, whenever at least one of the other values q₀, r₀, ... does not satisfy the preprogrammed relationship associating it with the value p₀, which correcting magnitudes are equal to the differences between the ideal values qᵢ,rᵢ, ... corresponding to said value P₀ in application of the above preprogrammed relationship and the detected real values q₀, r₀, ..., and so as to actuate accordingly the motor (9-12) associated with adjusting the parameter in question Q, R, ... other than the parameter P.

3. An adjustment device according to claim 1 or 2, characterized in that it includes means for temporarily neutralizing the set of preprogrammed control means, thereby making possible independent motorized adjustment of at least one P of the parameters to be adjusted P, Q, R, ..., so as to give it the value that corresponds to ideal adjustment for at least one of the following two morphological criteria: degree of flexing (A) of the legs of the user of the seat, and vertical position (B) of the user's eyes relative to the ideal sighting plane for driving, the computation means being organized in such a manner that, on subsequent use of the device after it is no longer being neutralized, ideal adjustment of said criterion is no longer capable of being significantly modified.

## Patentansprüche

1. Verstellvorrichtung für Fahrzeugsitze, umfassend Verstellmechanismen (21) für die Verstellparameter P, Q, R ... (Längsposition des Sitzes, Höhe des Sitzes, Neigung der Rückenlehne ...), Elektromotoren mit beiderlei Drehsinn (9-12) für die Mechanismen und Steuervorrichtungen (13, 14) für diese Motoren, die durch den auf dem Sitz sitzenden Nutzer leicht zu bedienen sind, sowie Vorrichtungen (24-26), um zu jedem Zeitpunkt den Wert jedes Verstellparameters P, Q, R ..., wobei dieser Wert durch eine elektrische Größe p, q, r ... wiedergegeben wird, zu erfassen,
dadurch **gekennzeichnet,** daß
die Motoren (9-12) von dem Typ sind, dessen Geschwindigkeit als Funktion von der Erregung veränderbar ist, daß die Steuervorrichtungen (23) dieser Motoren so ausgelegt sind, daß diese verschieden stark erregbar sind, daß darüber hinaus Speichervorrichtungen (22) vorgesehen sind, in welchen die Regeln gespeichert sind, die die unterschiedlichen Parameter, die zu verstellen sind, und ihre Veränderungen untereinander verbinden, vorprogrammierte Regeln, die im wesentlich von ergonomischen Normen bezüglich des menschlichen Körpers abhängen, und Rechenvorrichtungen (22), die so ausgelegt sind, daß zu jeder kleinen Änderung dp jeder dieser ausgesetzten elektrischen Größe p die kleinen entsprechenden Veränderungen dq, dr ... der anderen elektrischen Größen q, r ... gemäß der vorprogrammierten Regeln entsprechend bestimmt werden, und daß die Steuervorrichtungen (23) so vorprogrammiert sind, daß bei jeder Steuerung der Veränderung eines Parameters P im vorgegebenen Sinn die Bestimmung einer elektrischen Größe dp erfolgt, die nicht nur in die entsprechende Erregung des Motors (9-12), der der Verstellung des Parameters P zugeordnet ist, sondern auch mit Hilfe jeder der Größen dq, dr, ..., die in der Folge berechnet wurden, in die Erregung des Motors (9-12), der der Regelung des entsprechenden Parameters Q, R zugeordnet ist, umgesetzt wird.

2. Verstellvorrichtung nach Anspruch 1, bei welcher die Vorrichtungen (24-26) zum jederzeitigen Erfassen des reellen Wertes der zu verstellenden Parameter P, Q, R Positionsaufnehmer umfassen, die so ausgelegt und angebracht sind, daß sie die elektrischen Größen p₀, q₀, r₀ ... , die jederzeit die reellen Werte der besagten Parameter darstellen, bestimmen,
dadurch gekennzeichnet, daß
die Steuervorrichtungen (23) so ausgelegt sind, daß sie bei jedem der so bestimmten Werte p₀, wenn wenigstens einer der anderen Werte q₀, r₀ ... nicht der vorprogrammierten Regel gehorcht, die ihn mit dem Wert p₀ verbindet, eine Korrekturgröße dqᵢ, drᵢ ... gleich dem Unterschied zwischen einerseits dem Idealwert qᵢ, rᵢ ..., der nach der vorprogrammierten obigen Regel dem besagten Wert p₀ entspricht, und andererseits dem reellen erfaßten Wert q₀, r₀ ... bestimmen und entsprechend den Motor (9-12) ansteuern, der der Verstellung des betroffenen Parameters Q, R ... außer dem Parameter P zugeordnet ist.

3. Verstellvorrichtung nach einem der Ansprüche 1 und 2,
dadurch gekennzeichnet, daß
sie Vorrichtungen zur momentanen Neutralisierung der Gruppe der Steuervorrichtungen, die vorprogrammiert sind, und somit zum Ermöglichen der unabhängigen motorisierten Verstellung wenigstens eines Parameters P der zu verstellenden Parameter P, Q, R ... umfaßt, so daß diesem der der Idealregelung entsprechende Wert gemäß wenigstens eines der folgenden beiden morphologischen Kriterien zugeordnet werden kann: Neigungsgrad (A) der Beine des Nutzers des Sitzes und Vertikalposition (B) der Augen in bezug auf die ideale Sichtebene für das Fahren, wobei die Rechnervorrichtungen so ausgelegt sind, daß bei der späteren Inbetriebnahme der Vorrichtung nach Aufhebung der Neutralisation die Idealverstellung des besagten Kriteriums nicht mehr wesentlich verändert werden kann.
